# EUROPÄISCHE PATENTANMELDUNG

(11) **EP 1 168 144 A1**
(43) Veröffentlichungstag der Anmeldung: **02.01.2002**
(21) Anmeldenummer: 00113837.9
(22) Anmeldetag: 30.06.2000
(51) Int. Cl.: G06F 3/02

(54) **Zettelhalteeinrichtung für die Tastatur eines PC**

(71) Anmelder: Gschwind, Rolf, 88430 Rot (DE)
(72) Erfinder: Gschwind, Rolf, 88430 Rot (DE)

(57) **Zusammenfassung**

Die Erfindung betrifft eine Tastatur (1) für einen PC, mit einem Gehäuse (2) und mit einem Tastenfeld (7).
Die Erfindung zeichnet sich dadurch aus, dass an einer außerhalb des Tastenfeldes (7) gelegenen Fläche (6) des Gehäuses (2) eine Zettelhalteeinrichtung (10) vorgesehen ist.

## Beschreibung

Die Erfindung betrifft eine Tastatur für einen PC, mit einem Gehäuse und mit einem Tastenfeld.

Mit Tastaturen (Keyboards) dieser Art lassen sich Daten und Befehle in einen Personalcomputer (PC) eingeben.

Bei der täglichen Büroarbeit müssen oftmals kleine Mitteilungen und Notizen für Mitarbeiter hinterlegt werden, die für kurze Zeit nicht erreichbar oder gerade im Büro nicht anwesend sind. Solche Notizen werden meist auf einen kleinen Zettel geschrieben und für den abwesenden Mitarbeiter so zurecht gelegt, dass dieser bei seiner Rückkehr auf jeden Fall den Zettel erblicken soll. Eine beliebte Möglichkeit, den Zettel sichtbar zu hinterlegen besteht darin, den Zettel aufrecht zwischen die Tasten der Tastatur des Personalcomputers des zu informierenden Mitarbeiters einzustecken. Ist der Mitarbeiter länger abwesend, kann es vorkommen, dass dieser bei seiner Rückkehr eine ganze Anzahl von Zetteln in der Tastatur vorfindet. Man kann diese Art der Information als störend empfinden.

Es ist Aufgabe der Erfindung, eine Tastatur der hier vorliegenden Art so weiterzuentwickeln, dass Zettel auf bequeme Weise, gut sichtbar und dennoch nicht störend, an der Tastatur hinterlegt werden können.

Die Lösung der Aufgabe besteht darin, dass an einer außerhalb des Tastenfeldes gelegenen Fläche des Gehäuses der Tastatur eine Zettelhalteeinrichtung vorgesehen ist.

Durch die Erfindung brauchen Zettel nicht mehr zwischen die Tasten der Tastatur eingeklemmt zu werden. Die vorgesehene Zettelhalteeinrichtung erlaubt vielmehr in vorteilhafter Weise ein ordentliches Hinterlegen von Zetteln, die beispielsweise als Informationsmittel für einen nicht anwesenden Mitarbeiter eines Büros gedacht sind.

Die Zettelhalteeinrichtung kann so gestaltet sein, dass diese nachträglich an einer freien Fläche des Gehäuses der Tastatur angebracht werden kann. Dabei kann die Zettelhalteeinrichtung in vorteilhafter Weise auch als Werbeträger dienen. Es ist aber auch möglich, die Zettelhalteeinrichtung als unlösbaren Bestandteil der Tastatur vorzusehen. So kann die Zettelhalteeinrichtung durchaus an dem aus Kunststoff bestehenden Gehäuse der Tastatur angeformt sein.

Weitere vorteilhafte Ausbildungen lassen sich der nachfolgenden Beschreibung entnehmen, wobei die Erfindung anhand von verschiedenen Ausführungsbeispielen auch zeichnerisch dargestellt ist. Dabei zeigt
Fig. 1 in räumlicher Darstellung eine Tastatur, die eine Zettelhalteeinrichtung trägt;
Fig. 2 in einer Seitenansicht die in Fig. 1 dargestellte Tastatur, sowie die
Figuren 3 bis 5 weitere zweckmäßige Ausführungsbeispiele von Tastaturen.

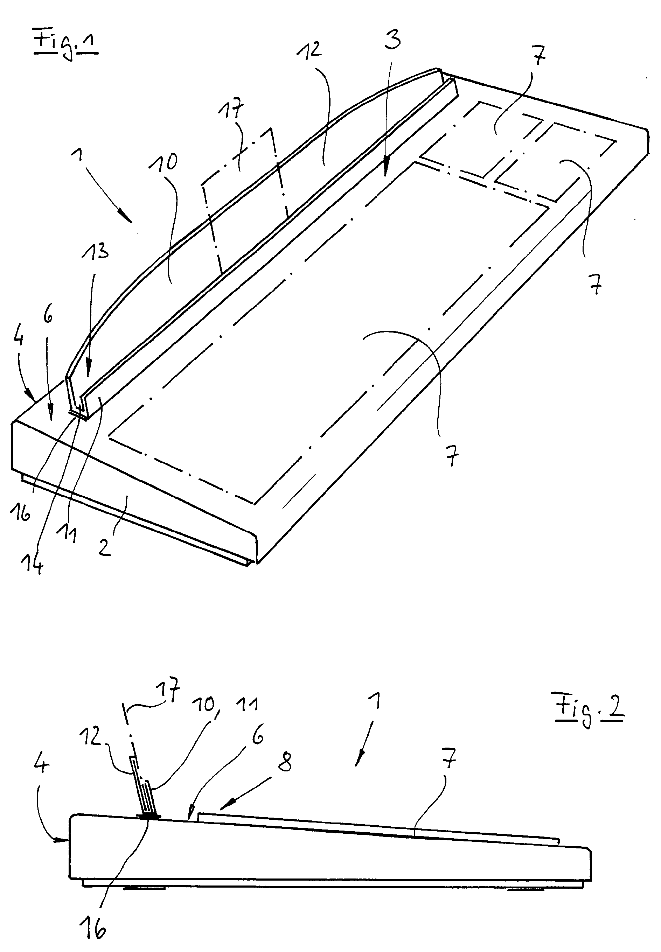

Die in Fig. 1 dargestellte Tastatur 1 ist für die Verwendung bei einem Personalcomputer bestimmt. Die Tastatur 1 weist in bekannter Weise ein Gehäuse 2 auf, das an seiner Oberseite 3 ein ebenfalls bekanntes Tastenfeld 7 trägt. An einer außerhalb des Tastenfeldes 7 gelegenen Fläche 6 ist eine Zettelhalteeinrichtung 10 angeordnet. Im Beispiel befindet sich die Fläche 6 auf der Oberseite 3 des Gehäuses 2. Die Fläche 6 befindet sich zwischen dem Tastenfeld 7 und der dem Benutzer der Tastatur 1 abgewandten Rückwand 4 des Gehäuses 2. Die im Blickfeld des Benutzers der Tastatur 1 befindliche Zettelhalteeinrichtung 10 ist bei diesem Ausführungsbeispiel als längliches einstückiges Gebildet gestaltet, das an seiner Unterseite mit einem Klebeband 16 ausgestattet ist, so dass die Zettelhalteeinrichtung 10 über eine Klebeverbindung lösbar mit der Tastatur 1 verbunden ist. Die Zettelhalteeinrichtung 10 weist einen vorderen Längssteg 11 und in einem geringeren parallelen Abstand zum vorderen Längssteg 11 einen hinteren Längssteg 12 auf, so dass zwischen beiden Längsstegen 11, 12 eine mit einem Boden 14 ausgestattete Längsnut 13 gebildet ist, in welcher Zettel 17 aufrecht stehend einsteckbar sind. In der Zeichnung ist ein Zettel 17 strichpunktiert gezeichnet dargestellt. Es ist zweckmäßig, den hinteren Längssteg 12 zumindest teilweise höher zu gestalten als den vorderen Längssteg 11. Diese Maßnahme erleichtert das Einstecken von Zetteln 17 in die Zettelhalteeinrichtung 10.

In einer Seitenansicht zeigt Fig. 2 die in Fig. 1 beschriebene Tastatur 1. Zwischen dem Tastenfeld 7 und der aufrecht verlaufenden Rückwand 4 der Tastatur 1 ist die Zettelhalteeinrichtung 10 auf der außerhalb des Tastenfeldes 7 gelegenen annähernd horizontalen Fläche 6 angeordnet. Zwischen dem Tastenfeld 7 und der Zettelhalteeinrichtung 10 ist ein Abstand gehalten, so dass die Zettelhalteeinrichtung 10 beim Antippen der obersten Tasten 8 des Tastenfeldes 7 nicht stört. Aus der Zeichnung ist ersichtlich, dass die Längsstege 11, 12 zur Rückwand 4 hin geneigt angeordnet sind. Dadurch lässt sich ein auf einem Zettel 17 geschriebener Text leichter lesen. Die Längsstege 11, 12 können jedoch auch durchaus senkrecht angeordnet sein, sofern sich dies aus anderweitigen Gründen als zweckdienlich erweist. Mit einem etwas dickeren Strich ist in der Zeichnung das Klebeband 16 angedeutet.

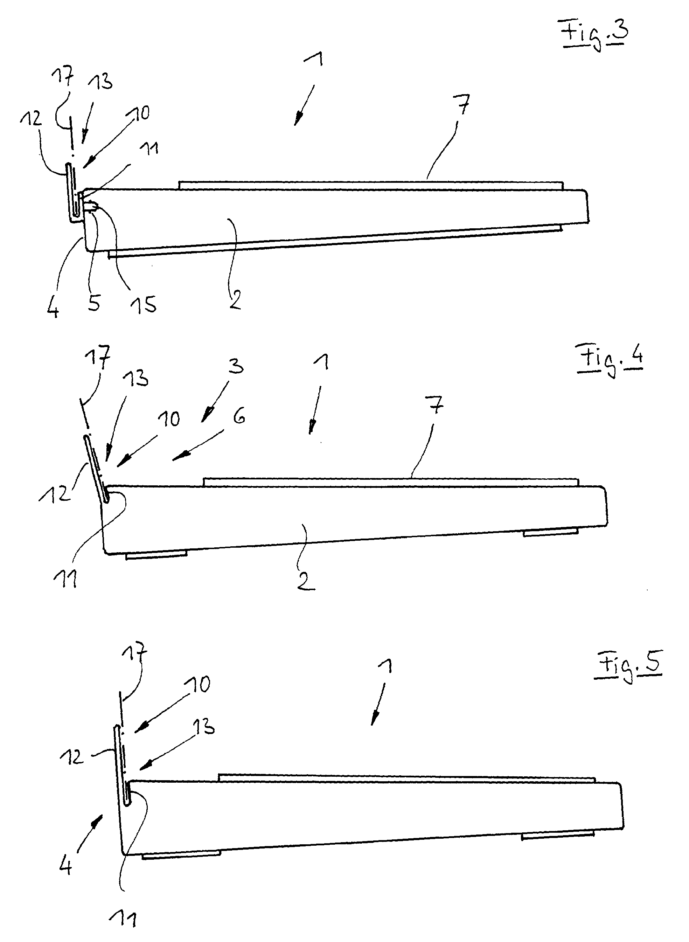

Anhand der Fig. 3 ist ersichtlich, dass es durchaus möglich ist, die längliche Zettelhalteeinrichtung 10 auch an der Rückwand 4 der Tastatur 1 anzuordnen. Die Zettelhalteeinrichtung 10 weist wieder einen vorderen und einen hinteren Längssteg 11, 12 auf, welche die Längsnut 13 entstehen lassen wobei im hier vorliegenden Falle die Zettelhalteeinrichtung 10 über eine Schnappverbindung lösbar mit dem Gehäuse 2 der Tastatur 1 verbunden ist. Zu diesem Zweck ist der vordere Längssteg 11 mit wenigstens zwei hinterschnittenen Zapfen 15 ausgestattet, die horizontal angeordnet, in entsprechenden, an der Rückwand 4 befindlichen Öffnungen 5 oder Durchbrüchen eingerastet sind. Es ist ein Leichtes, an der Rückwand 4 der Tastatur 1 bereits bei der Herstellung des Gehäuses 4 die Öffnungen 5 oder Durchbrüche vorzusehen. Die Verbindung zwischen der Zettelhalteeinrichtung 10 und dem Gehäuse 2 kann auch formschlüssig (Nut und Feder) ausgebildet sein.

Bei den in Fig. 4 und 5 gezeigten Ausführungsbeispielen ist die Zettelhalteeinrichtung 10 unlösbarer Bestandteil der Tastatur 1. Im und am Gehäuse 2 ist wieder außerhalb des Tastenfeldes 7 eine Fläche 6 vorgesehen, auf der sich die Längsnut 13 und zumindest der hintere Längssteg 12 befinden. In Fig. 4 ist auch noch ein vorderer Längssteg 11 vorgesehen, um die Längsnut 13 nicht zu tief in das Gehäuse 2 eindringen zu lassen. Die Längsstege 11, 12 und die Längsnut 13 werden beim Spritzvorgang des aus Kunststoff bestehenden Gehäuses 2 in einem einzigen Arbeitsgang hergestellt.
Während sich bei dem in Fig. 4 gezeigten Ausführungsbeispiel die Zettelhalteeinrichtung 10 an der Oberseite 3 der Tastatur 1 befindet, ist bei dem in Fig. 5 dargestellten Ausführungsbeispiel die Zettelhalteeinrichtung 10 an der Rückwand 4 der Tastatur 1 vorgesehen, wobei der hintere Längssteg 12 einen Teil der Rückwand 4 bildet. Nach vorne schließt die Längsnut 13 an, während der vordere Längssteg 11 als Teil der Gehäusewand gestaltet ist. In den Längsnuten 11, 12 der beiden Ausführungsbeispiele ist jeweils ein Zettel 17 in Seitenansicht eingezeichnet, wobei die Längsstege 11, 12 entweder wieder zur Rückwand 4 geneigt oder aber senkrecht angeordnet sind.

Es bleibt abschließend zu erwähnen, dass der hintere Längssteg 12 auch aufklappbar, also nach oben vergrößerbar ausgebildet sein kann, so dass in der so gestalteten Zettelhalteeinrichtung 10 auch größere Zettel 17 oder DIN-A4-Bögen abgelegt werden können. Ferner kann der hintere Längssteg 12 verbiegbar oder um eine horizontale Längsachse leicht bewegbar so angeordnet sein, dass dieser gegen den vorderen Längssteg 11 gedrückt ist und beim Einlegen eines Zettels 17 in die Längsnut 13 etwas nach hinten gedrückt werden muss. Sichtbare Flächen der Zettelhalteeinrichtung 10 können ferner zum Anbringen von Werbung benutzt werden. Schließlich ist es denkbar, die Zettelhalteeinrichtung 10 an einer Schmalseite der rechteckigen Tastatur 1 vorzusehen.

## Patentansprüche

1. Tastatur (1) für einen PC, mit einem Gehäuse (2) und mit einem Tastenfeld (7), **dadurch gekennzeichnet, dass** an einer außerhalb des Tastenfeldes (7) gelegenen Fläche (6) des Gehäuses (2) eine Zettelhalteeinrichtung (10) vorgesehen ist.

2. Tastatur nach Anspruch 1, **dadurch gekennzeichnet, dass** die Zettelhalteeinrichtung (10) lösbar am Gehäuse (2) angeordnet ist.

3. Tastatur nach Anspruch 1, **dadurch gekennzeichnet, dass** die Zettelhalteeinrichtung (10) unlösbarer Bestandteil des Gehäuses (2) ist.

4. Tastatur nach einem der Ansprüche 1 bis 3, **dadurch gekennzeichnet, dass** die Zettelhalteeinrichtung (10) entweder an der Oberseite (3) des Gehäuses (2) oder an der Rückseite (4) des Gehäuses (2) angeordnet ist.

5. Tastatur nach einem der Ansprüche 1 bis 4, **dadurch gekennzeichnet, dass** die Zettelhalteeinrichtung (10) zwischen dem Tastenfeld (7) und der Rückwand (4) des Gehäuses (2) angeordnet ist.

6. Tastatur nach Anspruch 1, 2 oder 5, **dadurch gekennzeichnet, dass** die Zettelhalteeinrichtung (10) über eine lösbare Klebeverbindung oder formschlüssig oder schnappschlüssig mit dem Gehäuse (2) verbunden ist.

7. Tastatur nach einem der Ansprüche 1 bis 6, **dadurch gekennzeichnet, dass** die Zettelhalteeinrichtung (10) einen vorderen Längssteg (11) und einen hinteren Längssteg (12) aufweist und dass durch die Längsstege (11, 12) eine Längsnut (13) zur Aufnahme eines Zettels (17) gebildet ist.

8. Tastatur nach einem der Ansprüche 1 bis 7, **dadurch gekennzeichnet, dass** der hintere Längssteg (12) höher ausgebildet ist als der vordere Längssteg (11).

9. Tastatur nach einem der Ansprüche 1 bis 8, **dadurch gekennzeichnet, dass** der vordere und der hintere Längssteg (11, 12) entweder senkrecht oder zur Rückwand (4) des Gehäuses (2) hin geneigt angeordnet sind.

10. Tastatur nach einem der Ansprüche 1 bis 9, **dadurch gekennzeichnet, dass** der hintere Längssteg (12) einen Teil der Rückwand (4) des Gehäuses (2) bildet.

11. Tastatur nach einem der Ansprüche 1 bis 10, **dadurch gekennzeichnet, dass** der hintere Längssteg (12) vergrößerbar ausgebildet ist.

12. Tastatur nach einem der Ansprüche 1 bis 11, **dadurch gekennzeichnet, dass** der hintere Längssteg (12) bewegbar gegen den vorderen Längssteg (11) gedrückt ist.
